# EUROPÄISCHE PATENTSCHRIFT

(11) **EP 2 396 183 B1**
(45) Veröffentlichungstag und Bekanntmachung des Hinweises auf die Patenterteilung: **19.10.2016**
(21) Anmeldenummer: 10701813.7
(22) Anmeldetag: 23.01.2010
(51) Int. Cl.: B60G 7/00, B62D 7/14, B62D 17/00

(54) **RADAUFHÄNGUNG FÜR KRAFTFAHRZEUGE MIT EINEM DEM RADTRÄGER ZUGEORDNETEN STELLGLIED ZUR EINSTELLUNG EINES SPUR- UND/ODER STURZWINKELS**
SUSPENSION SYSTEM FOR VEHICLES WITH AN ACTUATOR INTEGRATED IN THE WHEEL CARRIER FOR CONTROLLING THE TOE AND/OR CAMBER ANGLE
SYSTEME DE SUSPENSION POUR VEHICULES AVEC UN ACTIONNEUR INTÉGRÉ DANS LE SUPPORT DE ROUE POUR LE RÉGLAGE DE L'ANGLE DE BRAQUAGE ET/OUT L'ANGLE DE CARROSSAGE

(30) Priorität: 13.02.2009 DE 102009008833
(43) Veröffentlichungstag der Anmeldung: 21.12.2011
(73) Patentinhaber: Audi AG, 85045 Ingolstadt (DE)
(72) Erfinder: MEITINGER, Karl-Heinz, 83308 Trostberg (DE); MICHEL, Wilfried, 93339 Riedenburg (DE); MÜLLER, Hugo, 86701 Rohrenfels-Ballersdorf (DE); KOSSIRA, Christoph, 85053 Ingolstadt (DE); SCHMID, Wolfgang, 85354 Freising (DE)
(74) Vertreter: Asch, Konrad
(86) Internationale Anmeldenummer: PCT/EP2010/000402
(87) Internationale Veröffentlichungsnummer: WO 2010/091777

(56) Entgegenhaltungen:
- EP-A1- 1 405 739
- EP-A1- 1 970 586
- DE-A1- 2 354 201
- DE-A1-102004 049 296
- US-A- 3 679 017

## Beschreibung

Die Erfindung betrifft eine Radaufhängung für Kraftfahrzeuge nach dem Oberbegriff des Patentanspruches 1. Eine solche Radaufhängung wird in der DE 10 2004 049 296 A1 offenbart.

Bei aktiven Lenksystemen, insbesondere für die Hinterachse von Fahrzeugen kann der Radsturz bzw. die Radspur über ein Stellglied eingestellt werden, so dass durch Steuerung des Stellglieds aktiv auf das Fahrverhalten des Kraftfahrzeugs Einfluss genommen werden kann.

Aus der DE 39 28 135 A1 ist eine gattungsgemäße Radaufhängung für Kraftfahrzeuge bekannt. Der Radträger der Radaufhängung weist ein radseitiges, das Fahrzeugrad drehbar lagerndes Tragelement sowie ein achsseitiges Tragelement auf, zwischen denen ein Stellglied geschaltet ist. Das Stellglied ist hier ein hydraulischer Stellzylinder, der einerseits an einer Lagerkonsole des Radträgers abgestützt ist und andererseits mit seiner Kolbenstange gegen einen äußeren Wälzlager-Laufring eines Radlagers drückt, wodurch das Radlager zusammen mit dem Fahrzeugrad eine Schwenkbewegung um einen zentralen Gelenkmittelpunkt ausführt, um einen Vor- bzw. Nachspurwinkel oder einen Sturzwinkel des betreffenden Fahrzeugrades zu ändern.

Die aus der DE 39 28 135 A1 bekannte Anordnung des Stellglieds zwischen der Lagerkonsole und dem Radlager ist bauraumintensiv und konstruktiv aufwendig mit entsprechend hohem Gewicht gestaltet. Das insgesamt hohe Gewicht der Radaufhängung ist besonders nachteilig, da es sich beim Radträger um eine ungefederte Masse handelt.

Die Aufgabe der Erfindung besteht darin, eine Radaufhängung für ein angetriebenes Fahrzeugrad bereitzustellen, in der ein Lenksystem zur Spur-/Sturzverstellung bauraumgünstig angeordnet ist.

Die Aufgabe ist durch die Merkmale des Patentanspruches 1 gelöst. Vorteilhafte Weiterbildungen der Erfindung sind in den Unteransprüchen offenbart.

Gemäß dem kennzeichnenden Teil des Patentanspruches 1 ist in der Gelenkwelle ein Drehmomentübertragungsgelenk, etwa ein Gleichlaufgelenk oder ein Kardangelenk, geschaltet, das mit Bezug auf den Radträger in Fahrzeugquerrichtung zur Fahrzeugmitte hin so versetzt ist, dass es zumindest teilweise außerhalb des Radträgers positioniert ist.

Die Gelenkwelle wird durch einen Durchführungsbereich des Radträgers geführt. In der Gelenkwelle kann das Gelenk so geschaltet sein, dass es einer Lenkbewegung der Radaufhängung spannungsfrei folgen kann.

Bei einer Positionierung des Drehmomentübertragungsgelenks im Durchführungsbereich des Radträgers baut das Stellglied radial sehr groß, um das Gelenk zu integrieren, wodurch Package-Probleme mit den übrigen Fahrwerksbauteilen entstehen können.

Erfindungsgemäß kann demgegenüber in einer bevorzugen Ausführungsform das Gelenk in der Fahrzeugquerrichtung seitlich versetzt zum Radträger sowie vollständig außerhalb des Radträgers angeordnet sein. In diesem Fall kann das Stellglied im Durchmesser kleiner gestaltet werden, da das Gelenk nicht mehr im Radträger integriert ist.

Für einen einwandfreien Antrieb des Fahrzeugrades kann der Durchführungsbereich bzw. der Stellglied-Hohlraum derart bemessen sein, dass die zum Fahrzeugrad geführte Gelenkwelle berührungsfrei durch den Stellglied-Hohlraum verläuft. Bei der Auslegung des Stellglied-Hohlraumes ist zu berücksichtigen, dass die Gelenkwelle mit ihrem Gelenk unabhängig von den eingestellten Spur-/Sturzwinkeln berührungsfrei durch das Stellglied geführt ist.

Bei einer Anordnung des Gelenks genau im Momentanpol bzw. Bewegungspol des radseitigen Tragelementes, das gegenüber dem achsseitigen Tragelement verschwenkbar ist, ist kein Längenausgleich durch die Schwenkbewegung am Gelenk erforderlich. Für den Fall, dass der Momentanpol innerhalb des Stellglied-Hohlraumes liegt, ist daher das Gelenk innerhalb des Radträgers zu integrieren. Aufgrund des sehr großen Durchmessers des Gelenks von üblicherweise mehr als 100 mm baut in diesem Fall der Radträger insgesamt im Durchmesser jedoch sehr groß. Die Folge ist, dass das um die Gelenkwelle angeordnete Stellglied im Durchmesser sehr groß wird und das Package-Problem mit übrigen Fahrwerksbauteilen (Fahrwerkslenker, Bremssattel oder dergleichen) entstehen können. Erfindungsgemäß ist dagegen das Gelenk außerhalb des Bewegungspols angeordnet

Das Gleichlauf- oder Kardangelenk teilt die Gelenkwelle in einen zum Fahrzeugrad geführten ersten Wellenabschnitt und einen zur Fahrzeugmitte geführten zweiten Wellenabschnitt auf. Für den Fall, dass das Gelenk außerhalb des Bewegungspols angeordnet ist, wird der erste Wellenabschnitt zusammen mit dem Gelenk bei einer Spur-/Sturzeinstellung nach Art einer Taumelbewegung um eine Mittelachse des achsseitigen Tragelementes bewegt.

Für einen einwandfreien Betrieb ist es von Bedeutung, dass trotz dieser Taumelbewegung die Gelenkwelle berührungsfrei gegenüber dem Stellglied verbleibt. Vor diesem Hintergrund kann der Durchführungsbereich des Radträgers an seiner vom Fahrzeugrad abgewandten Seite eine ausgeweitete Aussparung aufweisen. In der Aussparung kann zumindest teilweise das Gelenk angeordnet sein oder kann das Gelenk während einer Sturz-/Spurverstellung zumindest teilweise in die Aussparung einragen.

Das Stellglied weist ein radseitiges Drehteil und ein achsseitiges Drehteil auf, die zwischen dem radseitigen Tragelement und dem achsseitigen Tragelement angeordnet sind und um ihre Drehachsen zueinander verdrehbar sind. Dabei kann das radseitige Drehteil durch Verdrehen der beiden Drehteile zueinander um einen Schwenkwinkel gegenüber dem achsseitigen Drehteil ausgelenkt werden. Entsprechend wird daher auch das am radseitigen Tragelement vorgesehene Fahrzeugrad um einen Spur- und/oder Sturzwinkel verschwenkt. Im Unterschied zum Stand der Technik erfolgt daher eine Winkelverstellung des radseitigen Tragelements durch eine Drehbetätigung eines der Drehteile bzw. der beiden Drehteile des Stellglieds, und nicht durch eine Linear-Hubbewegung eines hydraulischen Stellzylinders, der gegen das radseitige Lagerelement drückt. Die Winkelverstellung kann durch gegensinnige oder gleichsinnige Drehbetätigung beider Drehteile bzw. auch durch Drehung eines der beiden Drehteile erfolgen, während das andere Drehteil nicht um seine Achse rotiert.

Erfindungsgemäß kann das radseitige Drehteil mit seiner Mittelachse nach Art einer Taumelbewegung um seine Drehachse bewegt werden. Hierzu kann die Drehachse des radseitigen Drehteils um einen Winkel gegenüber der Drehachse des achsseitigen Drehteils schräggestellt sein. Bei der Taumelbewegung des radseitigen Drehteiles können die beiden Drehteile über Steuerflächen in Anlage, vorzugsweise in Gleitkontakt und/oder in Wälzkontakt (Wälzlager), sein, die wiederum in einer Drehebene liegen. Die Drehebene ist dabei senkrecht zur Drehachse des radseitigen Drehteils ausgerichtet. Auf diese Weise kann sich das radseitige Drehteil mit zugehörigem radseitigen Tragelement für das Fahrzeugrad in einer Taumelbewegung um seine Drehachse bewegen. Dabei ändert sich der Schwenkwinkel zwischen dem radseitigen Drehteil und dem achsseitigen Drehteil in Abhängigkeit von dem Drehwinkel des radseitigen Drehteils.

Zur Ausbildung des Stellglied-Hohlraums sind die beiden Drehteile als Hohlzylinder ausgebildet. Der zylindrische Innenraum der Hohlzylinder kann daher als Bauraum für die Gelenkwellen bzw. Gleichlaufwellen verwendet werden. Der Stellantrieb für die beiden Drehteile kann außerhalb der Hohlräume vorgesehen und trieblich mit den Drehteilen verbunden sein.

Durch eine Drehung des radseitigen Drehteils gegenüber dem achsseitigen Drehteil kann somit der Schwenkwinkel zwischen den beiden Drehteilen eingestellt werden. Der maximal einstellbare Schwenkwinkel ist dabei aus geometrischen Gründen das Zweifache des zwischen den beiden Drehachsen eingeschlossenen Neigungswinkels.

Durch eine gleichzeitig oder zeitlich versetzt erfolgende Drehung der beiden hohlzylindrischen Drehteile des Stellglieds kann die räumliche Ausrichtung der von den beiden Drehteilen gebildeten Winkelanordnung verändert werden.

Als Stellantrieb für die beiden Drehteile ist insbesondere ein Drehmotor geeignet, der außerhalb sein kann.

Nachfolgend ist ein Ausführungsbeispiel der Erfindung anhand der beigefügten Figuren beschrieben.

Es zeigen:
- Fig. 1: in einer schematischen Prinzipdarstellung eine Radaufhängung an einer Fahrzeughinterachse gemäß dem ersten Ausführungsbeispiel;
- Fig. 2: eine Ansicht, die die Schwenkbewegungen der beiden Drehteile des Stellglieds zur Einstellung des Spur- oder Sturzwinkels veranschaulicht;
- Fig. 3: in einer vergrößerten Teilschnittansicht die Radaufhängung;
- Fig. 4: die Radaufhängung mit verstelltem radseitigen Tragelement;
- Fig. 5 und 6: ein nicht von der Erfindung umfasstes Vergleichsbeispiel in Ansichten entsprechend der Fig. 3 und 4.

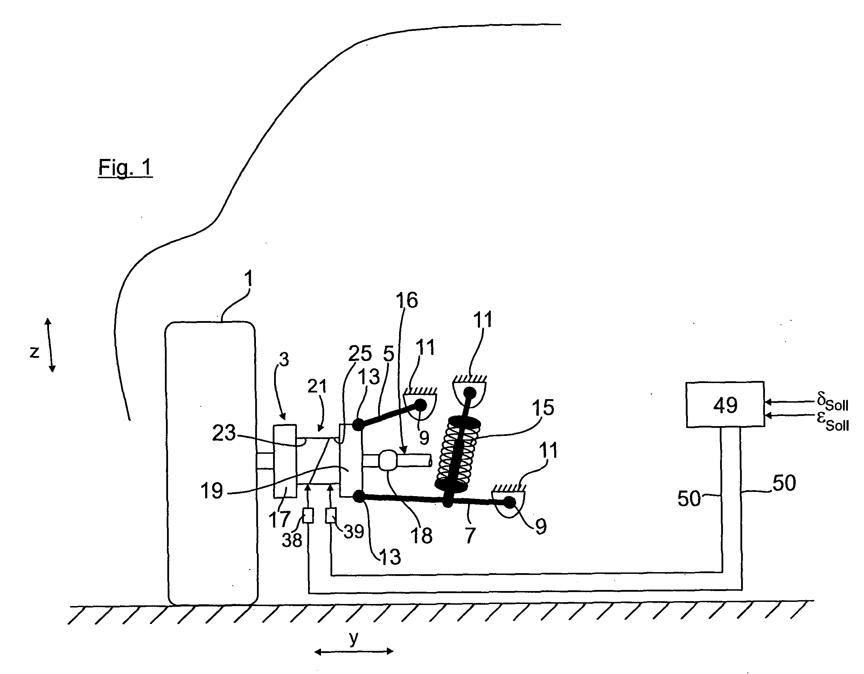

In der Fig. 1 ist eine Radaufhängung in Verbindung mit einer bekannten Querlenkerachse dargestellt, bei welcher ein das angetriebene Hinterrad 1 tragender Radträger 3 unter anderem mit Hilfe eines oberen Querlenkers 5 und eines unteren Querlenkers 7 über aufbauseitige Lenkerlager 9 schwenkbar am Fahrzeugaufbau 11 angebunden ist. Die aufbauseitigen Lenkerlager 9 sowie die radträgerseitigen Lenkerlager 13 sind von üblichem Aufbau. Zwischen dem unteren Querlenker 7 und dem Fahrzeugaufbau 11 ist außerdem in üblicher Weise eine Tragfeder 15 mit zugeordnetem Federbein abgestützt.

Abweichend von der gezeigten Querlenkerachse kann der Radträger 3 mit jeder beliebigen Achse kombiniert werden, etwa einer Starrachse, einer Verbundlenkerachse, einer Mehrlenkerachse, etc.

Gemäß der Fig. 1 weist der Radträger 3 ein radseitiges Tragelement 17 sowie ein achsseitiges Tragelement 19 auf. Am radseitigen Tragelement 17 ist das Fahrzeugrad 1 über eine Radnabe in einem nicht dargestellten Radlager des radseitigen Tragelements 17 gelagert. Außerdem kann am radseitigen Tragelement 17 eine Bremsanlage in üblicher Weise angebracht sein. Am achsseitigen Tragelement 19 sind die beiden Querlenker 5, 7 über die Lenkerlager 13 angebunden.

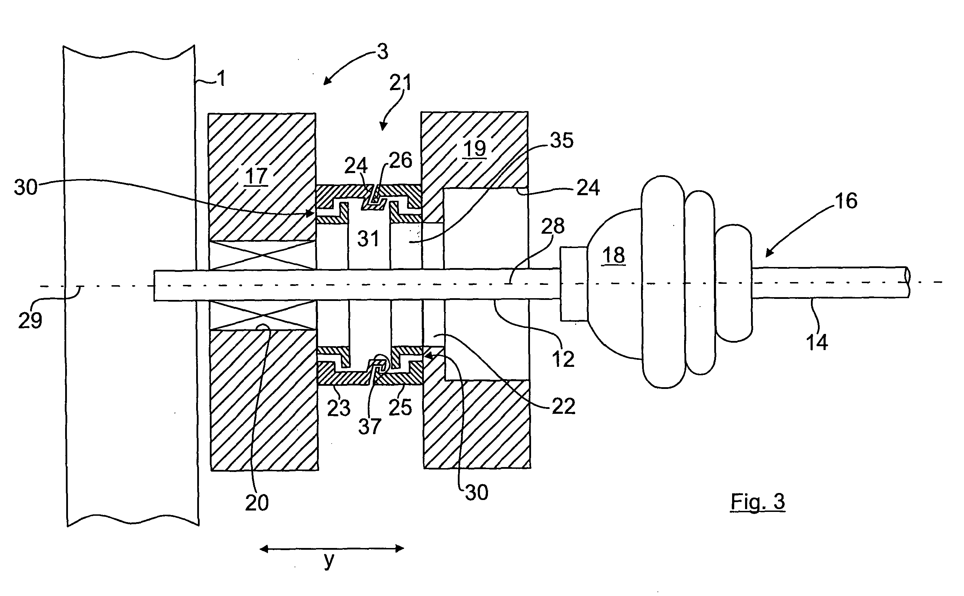

Das in der Fig. 1 angedeutete Fahrzeug weist einen Hinterradantrieb oder einen Allradantrieb auf, bei dem das Hinterrad 1 mit einer Gelenkwelle 16 angetrieben ist. Die Gelenkwelle 16 weist ein Drehmomentübertragungsgelenk 18, etwa ein Gleichlaufgelenk oder ein Kardangelenk, auf, das gemäß der Fig. 3 die Gelenkwelle 16 in einen ersten und einen zweiten Wellenabschnitt 12, 14 aufteilt. Der erste Wellenabschnitt 12 ist durch einen später beschriebenen Stellglied-Hohlraum 35 bis zum Hinterrad 1 geführt. Nachfolgend wird beispielhaft als Drehmomentübertragungsgelenk ein Gleichlaufgelenk verwendet.

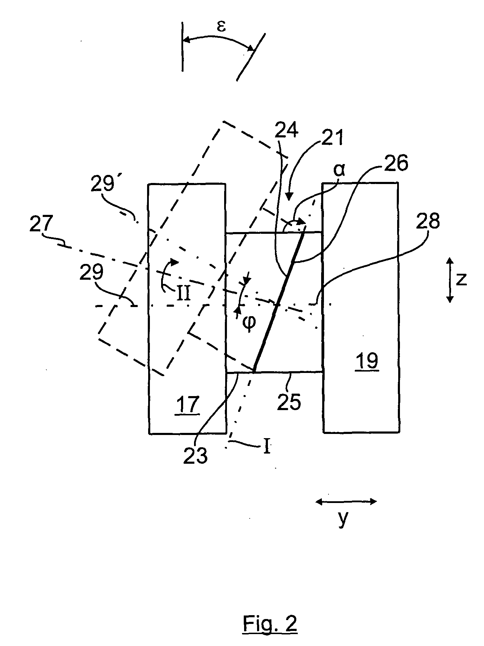

Zwischen den beiden Tragelementen 17, 19 ist ein Stellglied 21 vorgesehen, das ein radseitiges Drehteil 23 und ein achsseitiges Drehteil 25 aufweist. Wie aus der Prinzipdarstellung der Fig. 2 hervorgeht, sind die beiden Drehteile 23, 25 des Stellglieds 21 über schräggestellte Steuerflächen 24, 26 miteinander in Anlage. Die beiden Steuerflächen 24, 26 liegen somit in einer, in der Fig. 2 angedeuteten Drehebene I, in der sie in Gleitkontakt aufeinander verschiebbar sind. Anstelle des gezeigten Gleitkontakts ist ebenso eine Wälzlagerung zwischen den Drehteilen möglich.

Die Drehteile 23, 25 sind jeweils um ihre in der Fig. 2 gezeigten Drehachsen 27, 28 drehbar zwischen den beiden Tragelementen 17, 19 gelagert. Die Drehachse 28 des Drehteils 25 ist in Fahrzeugquerrichtung y axial ausgerichtet sowie koaxial zur Mittelachse 29 des Drehteils 23. Die Drehachse 27 des Drehteils 23 ist hier nicht identisch mit der Mittelachse 29. Vielmehr ist die um einen Neigungswinkel nach oben geneigt. Bei einer Drehung um einen Drehwinkel α bewegt sich daher das Drehteil 23 mit seiner Mittelachse 29 in einer Taumelbewegung II mit veränderlichem Schwenkwinkel ϕ um die Drehachse 27. Der Drehwinkel a beschreibt einen Drehwinkelversatz zwischen dem Drehteil 23 und dem Drehteil 25.

Außerdem ist in der Fig. 2 in gestrichelten Linien das Drehteil 23 beispielhaft in einer Drehlage bei einem Drehwinkel α=180° gezeigt. In dieser Drehlage ist das Drehteil 23 mit seiner Mittelachse 29' in der Taumelbewegung II um die Drehachse 27 nach oben bewegt. Dadurch ergibt sich ein Schwenkwinkel ϕ zwischen den beiden Drehteilen 23 und 25. Der Schwenkwinkel ϕ hat bei dem gezeigten Drehwinkel α von 180° seinen Maximalwert. Entsprechend ist auch das Fahrzeugrad 1 bzw. das radseitige Tragelement 17 um den Sturzwinkel ε in der yz-Ebene geschwenkt.

Gleichzeitig mit der Drehung des Drehteils 23 oder zeitlich versetzt dazu kann das Drehteil 25 um einen Drehwinkel β gegenüber dem achsseitigen Tragelement 19 gedreht werden.

In der Fig. 3 ist das Drehteil 23 in seiner Ausgangslage bei einem Drehwinkel α=0 gezeigt, in der die Mittelachse 29 des Drehteils 23 koaxial zur Drehachse 28 des Drehteils 25 ausgerichtet ist. In diesem Fall liegt ein in der Fig. 2 gezeigter Sturzwinkel ε in der dargestellten yz-Ebene des Fahrzeugrads 1 bei 0.

In der Fig. 3 ist außerdem grob schematisch und lediglich beispielhaft die Lagerung der beiden Drehteile 23, 25 zwischen den Tragelementen 17, 19 des Radträgers 3 gezeigt. So sind die Drehteile 23, 25 über Drehlager 30 mit den Tragelementen 17, 19 in Verbindung. Die Drehlager 30 weisen jeweils einen vom Tragelement 17, 19 ragenden Achsvorsprung 31 auf, der in das hohlzylindrisch gebildete Drehteil 23, 25 hintergreift dabei mit einem in Radialrichtung ausgeweiteten Flansch 32 einen stirnseitigen Ringbund 33 des jeweiligen Drehteils 23, 25. Die beiden Drehteile 23, 25 sind dabei mit ihrem Ringbund 33 drehbar zwischen dem Flansch 32 und dem jeweiligen Tragelement 17, 19 angeordnet. An den zueinander in Anlage befindlichen Steuerflächen 25, 26 sind einander gegenüberliegende Montageöffnungen vorgesehen. Diese verbinden die beiden zylindrischen Innenräume 35 der Drehteile 23, 25 miteinander.

Wie oben erwähnt, sind die beiden Steuerflächen 24, 26 zueinander in Gleitkontakt und beim Verdrehen der beiden Drehteile aneinander verschiebbar.
Zur Kopplung der beiden Drehteile 23, 25 ist gemäß der Fig. 2 die Steuerfläche 24 des radseitigen Drehteils 23 mit einem im Querschnitt hakenförmigen, umlaufenden Flansch 36 ausgebildet. Der Flansch 36 ragt durch die Montageöffnung der gegenüberliegenden Steuerfläche 26 des achsseitigen Drehteils 25 und hintergreift mit einem Schenkel 37 die Steuerfläche 26 das Drehteil 25.

Durch die Hohlräume 35 der beiden Drehteile 23 und 25 ist der erste Wellenabschnitt,12 der Gelenkwelle 16 geführt und an seinem in der Fig. 3 linken Ende mit dem Fahrzeug-Hinterrad 1 verbunden. Der erste Wellenabschnitt 12 ist unter Zwischenschaltung eines Radlagers 20 durch das radseitige Tragelement 17 geführt. Ansonsten ist der erste Wellenabschnitt 12 berührungsfrei durch die beiden Drehteile 23, 25 sowie durch das achsseitige Tragelement 19 geführt. Das Gleichlaufgelenk 18 ist dabei in Fahrzeugquerrichtung y seitlich versetzt außerhalb des Stellglied-Hohlraumes 35 angeordnet.

Der erste Wellenabschnitt 12 ist durch eine in Axialrichtung abgestufte Bohrung 22 des achsseitigen Tragelements 19 geführt. Diese weist an der, dem Gleichlaufgelenk 16 zugewandten Seite eine radial ausgeweitete Ausnehmung 24 auf.

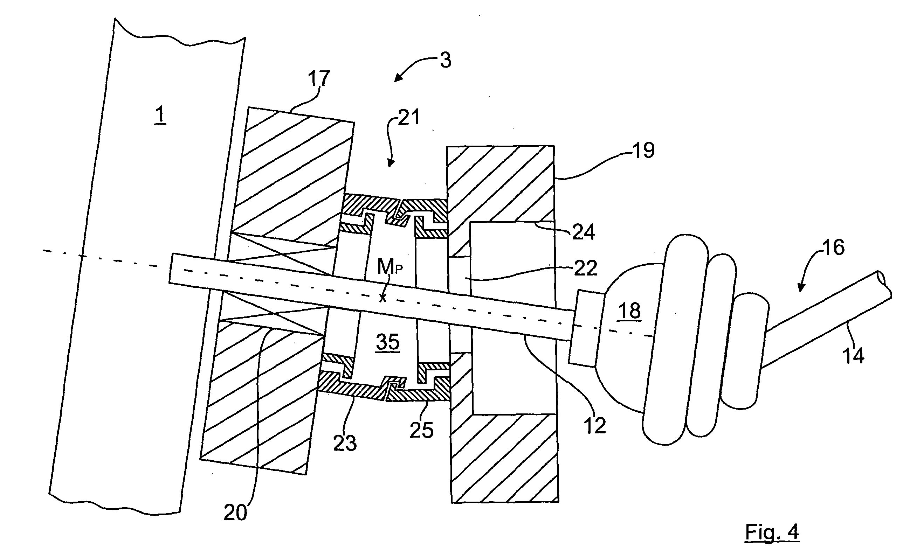

Zur aktiven Spur- und Sturzverstellung können die beiden Drehteile 23, 25 gegeneinander verdreht werden, so dass sich die in der Fig. 4 gezeigte maximale Auslenkung des radseitigen Tragelementes gegenüber dem achsseitigen Tragelement 19 ergeben kann. Bei einer derart ausgeführten Spur-/Sturzeinstellung wird der erste Wellenabschnitt 12 zusammen mit dem Gleichlaufgelenk 16 nach Art einer Taumelbewegung innerhalb des Stellglied-Hohlraumes 35 bewegt. Diese Taumelbewegung ist bei der Auslegung des Stellglied-Hohlraumes berücksichtigt, so dass unabhängig vom eingestellten Spur-/Sturzwinkel der erste Wellenabschnitt 12 berührungsfrei durch die Drehteile 23, 25 sowie das achsseitige Tragelement 19 geführt ist.

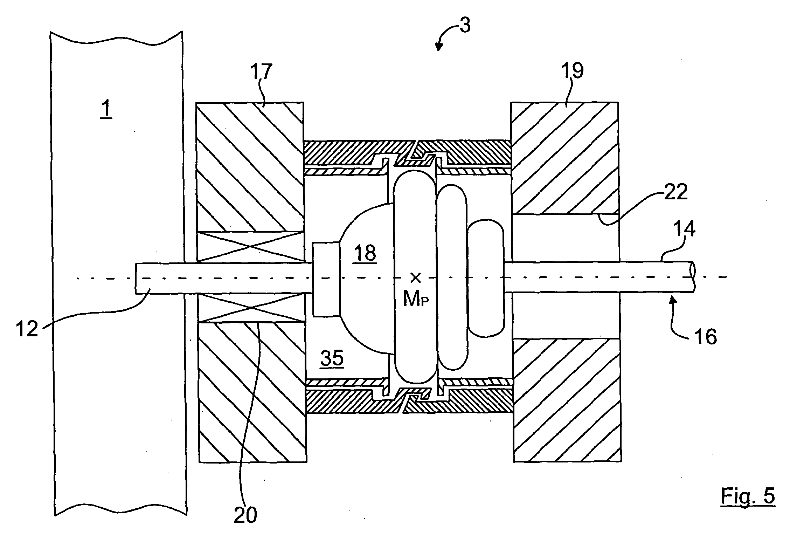

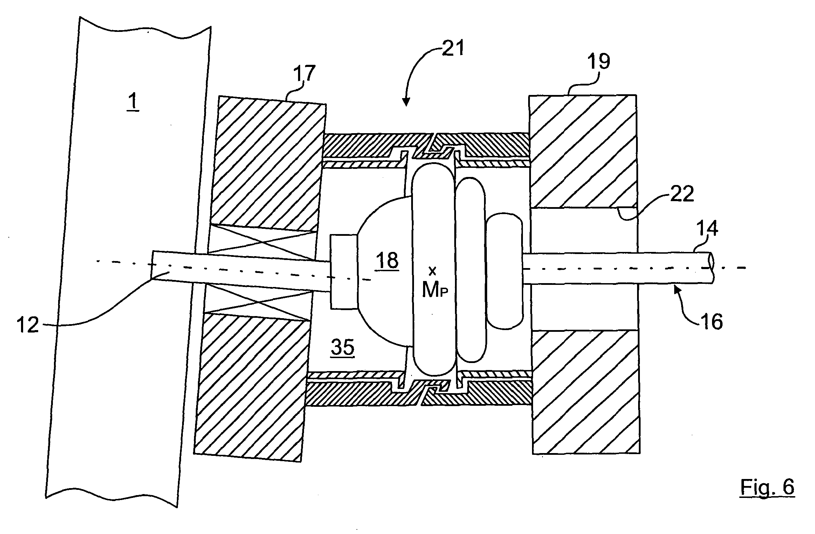

In den Fig. 5 und 6 ist eine nicht von der Erfindung umfasste Radaufhängung gezeigt, deren Wirkungsweise und Aufbau im Wesentlichen mit den ersten Ausführungsbeispiel übereinstimmt. Im Unterschied zum erfindungsgemäßen Ausführungsbeispiel ist hier das Gleichlaufgelenk 18 unmittelbar in den Stellglied-Hohlraum 35 integriert. Das Gleichlaufgelenk 18 ist dabei genau im Momentanpol M des radseitigen Tragelementes 17 angeordnet. Auf diese Weise muss bei der Sturz-/Spureinstellung am Gleichlaufgelenk kein Längenausgleich stattfinden, der im ersten Ausführungsbeispiel durch die Taumelbewegung erfolgt.

Aufgrund des sehr großen Durchmessers des Gleichlaufgelenkes 18 ist der Stellglied-Hohlraum 35 in Radialrichtung entsprechend groß zu bemessen. Die Folge ist, dass die um die Gelenkwelle 16 angeordneten Verstellzylinder im Vergleich zum ersten Ausführungsbeispiel im Durchmesser sehr groß werden und dass Package-Probleme mit den übrigen Fahrwerksbauteilen entstehen können.

## Patentansprüche

1. Radaufhängung für ein mittels einer Gelenkwelle (16) angetriebenes Fahrzeugrad, insbesondere Hinterrad (1), eines Kraftfahrzeugs, mit einem Radträger (3), der ein radseitiges, das Fahrzeugrad (1) drehbar lagerndes Tragelement (17) und ein achsseitiges Tragelement (19) aufweist, zwischen denen zur Einstellung eines Spur- und/oder Sturzwinkels ein Stellglied (21) geschaltet ist, das ein radseitiges Drehteil (23) und ein achsseitiges Drehteil (25) aufweist, die um ihre Drehachsen (27, 28) zueinander verdrehbar sind, und das radseitige Drehteil (23) beim Verdrehen der beiden Drehteile (23, 25) um einen Schwenkwinkel (ϕ) gegenüber dem achsseitigen Drehteil (25) auslenkbar ist, die Drehteile (23, 25) hohlzylindrisch ausgebildet sind, und in der durch einen Stellglied-Hohlraum (35) geführten Gelenkwelle (16) ein Drehmomentübertragungsgelenk (18) geschaltet ist,
**dadurch gekennzeichnet,**
**dass** die beiden in der Fahrzeugquerrichtung (y) nebeneinander angeordneten Drehteile (23, 25) einen Stellglied-Hohlraum (35) außenseitig begrenzen, und
**dass** das Drehmomentübertragungsgelenk (18) in der Fahrzeugquerrichtung (y) um einen Versatz seitlich versetzt zum Radträger (3) sowie vollständig außerhalb des Stellglied-Hohlraums (35) angeordnet ist.

2. Radaufhängung nach Anspruch 1, **dadurch gekennzeichnet, dass** der Stellglied-Hohlraum (35) derart bemessen ist, dass die Gelenkwelle (16) berührungsfrei durch den Stellglied-Hohlraum (35) verläuft.

3. Radaufhängung nach einem der Ansprüche 1 oder 2, **dadurch gekennzeichnet, dass** die Gelenkwelle (16) einen zum Fahrzeugrad (1) geführten ersten Wellenabschnitt (12) und einen zur Fahrzeugmitte geführten zweiten Wellenabschnitt (14) aufweist, die über das Drehmomentübertragungsgelenk (18) miteinander verbunden sind, und dass insbesondere der erste Wellenabschnitt (12) zusammen mit dem Drehmomentübertragungsgelenk (18) bei einer Schwenkbewegung des radseitigen Tragelements (17) zur Spur-/Sturzeinstellung nach Art einer Taumelbewegung um eine Mittelachse des achsseitigen Tragelementes (19) bewegbar ist.

4. Radaufhängung nach einem der vorhergehenden Ansprüche, **dadurch gekennzeichnet, dass** das Drehmomentübertragungsgelenk (18) außerhalb eines Bewegungspols (M_{P}) des Fahrzeugrades (1) angeordnet ist.

5. Radaufhängung nach einem der vorhergehenden Ansprüche, **dadurch gekennzeichnet, dass** der Stellglied-Hohlraum (35) an seiner vom Fahrzeugrad (1) abgewandten Seite eine ausgeweitete Ausnehmung (24) aufweist, in der insbesondere zumindest teilweise das Drehmomentübertragungsgelenk (18) angeordnet ist.

6. Radaufhängung nach einem der vorhergehenden Ansprüche, **dadurch gekennzeichnet, dass** die Drehachse (27) des radseitigen Drehteils (23) um einen Neigungswinkel gegenüber der Drehachse (28) des achsseitigen Drehteils (25) schräggestellt ist.

7. Radaufhängung nach einem der vorhergehenden Ansprüche, **dadurch gekennzeichnet, dass** das Drehteil (23) mit seiner Mittelachse (29, 29') in einer Taumelbewegung mit veränderlichem Schwenkwinkel (ϕ) um die Drehachse (27) drehbar ist.

8. Radaufhängung nach einem der vorhergehenden Ansprüche, **dadurch gekennzeichnet, dass** durch Drehung des radseitigen Drehteils (23) der Schwenkwinkel (ϕ) eingestellt ist, und durch Drehung des achsseitigen Drehteils (25) gegenüber dem achsseitigen Tragelement (19) die räumliche Ausrichtung des Drehteil-Verbundes festlegbar ist.

9. Radaufhängung nach einem der vorhergehenden Ansprüche, **dadurch gekennzeichnet, dass** jedem der beiden Drehteile (23, 25) ein Stellantrieb (38, 39), insbesondere ein Drehmotor, zugeordnet ist, der außerhalb des jeweiligen Drehteils (23, 25) angeordnet ist.

## Claims

1. Wheel suspension for a vehicle wheel, in particular rear wheel (1), of a motor vehicle, driven by means of a cardan shaft (16), having a wheel mount (3) which has a wheel-side bearing element (17) which mounts the vehicle wheel (1) rotatably and an axle-side bearing element (19), between which an actuator (21) is switched for adjusting a toe and/or camber angle, said actuator having a wheel-side rotating part (23) and an axle-side rotating part (25) which are rotatable with respect to each other around their rotational axes (27, 28), and the wheel-side rotating part (23) is able to be deflected by a pivot angle (ϕ) relative to the axle-side rotating part (25) during rotation of the two rotating parts (23, 25), the rotating parts (23, 25) are formed as hollow cylinders, and a torque transmission joint (18) is switched in the cardan shaft (16) guided through an actuator cavity (35),
**characterised in that**
the two rotating parts (23, 25) arranged one next to the other in the vehicle transverse direction (y) limit an actuator cavity (35) on the outer side, and
that the torque transmission joint (18) is arranged to be laterally offset to the wheel mount (3) by an offset in the vehicle transverse direction (y) as well as to be completely outside the actuator cavity (35).

2. Wheel suspension according to claim 1, **characterised in that** the actuator cavity (35) is measured in such a way that the cardan shaft (16) runs through the actuator cavity (35) without contact.

3. Wheel suspension according to any one of claims 1 or 2, **characterised in that** the cardan shaft (16) has a first shaft section (12) guided towards the vehicle wheel (1) and a second shaft section (14) guided towards the vehicle centre, which are connected to each other via the torque transmission joint (18); and in particular the first shaft section (12) is moveable around a central axis of the axle-side bearing element (19) together with the torque transmission joint (18) in a pivot movement of the wheel-side bearing element (17) in the manner of a tumbling motion for toe/camber adjustment.

4. Wheel suspension according to any one of the preceding claims, **characterised in that** the torque transmission joint (18) is arranged outside a movement pole (M_{P}) of the vehicle wheel (1).

5. Wheel suspension according to any one of the preceding claims, **characterised in that** the actuator cavity (35) has an extended recess (24) on its side facing away from the vehicle wheel (1) in which recess the torque transmission joint (18) is in particular at least partially arranged.

6. Wheel suspension according to any one of the preceding claims, **characterised in that** the rotational axis (27) of the wheel-side rotating part (23) is slanted by an angle of inclination relative to the rotational axis (28) of the axle-side rotating part (25).

7. Wheel suspension according to any one of the preceding claims, **characterised in that** the rotating part (23) is rotatable around the rotational axis (27) with a changeable pivot angle (ϕ) in a tumbling movement with its central axis (29, 29').

8. Wheel suspension according to any one of the preceding claims, **characterised in that** the pivot angle (ϕ) is adjusted by rotating the wheel-side rotating part (23), and the spatial alignment of the rotating part composite is able to be determined by rotating the axle-side rotating part (25) relative to the axle-side bearing element (19).

9. Wheel suspension according to any one of the preceding claims, **characterised in that** an actuator (38, 39), in particular a rotary engine, is allocated to each of the two rotating parts (23, 25), said actuator being arranged outside the respective rotating part (23, 25).

## Revendications

1. Suspension de roue pour une roue de véhicule entraînée au moyen d'un arbre articulé (16), notamment pour une roue arrière (1), d'un véhicule automobile, avec un support de roue (3) qui comporte un élément porteur côté roue (17) qui supporte la roue de véhicule (1) de manière à permettre la rotation et un élément porteur côté essieu (19), éléments porteurs entre lesquels est placé pour le réglage d'un angle de pincement et/ou de carrossage un organe de réglage (21) qui comporte une partie tournante côté roue (23) et une partie tournante côté essieu (25), lesquelles parties tournantes peuvent tourner l'une par rapport à l'autre autour de leurs axes de rotation (27, 28), la partie tournante côté roue (23) pouvant être sortie lors de la rotation des deux parties tournantes (23, 25) d'un angle de pivotement (φ) par rapport à la partie tournante côté essieu (25), les parties tournantes (23, 25) étant conçues cylindriques et creuses et une articulation de transmission de couple (18) étant placée dans l'arbre articulé (16) guidé à travers l'espace creux d'organe de réglage (35),
**caractérisée en ce que**
- les deux parties tournantes (23, 25) agencées l'une à côté de l'autre dans la direction transversale (y) du véhicule délimitent côté extérieur un espace creux d'organe de réglage (35), et
- l'articulation de transmission de couple (18) est agencée décalée latéralement d'un certain décalage dans la direction transversale (y) du véhicule par rapport au support de roue (3) ainsi que complètement en dehors de l'espace creux d'organe de réglage (35).

2. Suspension de roue selon la revendication 1, **caractérisée en ce que** l'espace creux d'organe de réglage (35) est dimensionné de telle sorte que l'arbre articulé (16) s'étend sans le toucher à travers l'espace creux d'organe de réglage (35).

3. Suspension de roue selon l'une des revendications 1 ou 2, **caractérisée en ce que** l'arbre articulé (16) comporte un premier tronçon d'arbre (12) guidé vers la roue de véhicule (1) et un deuxième tronçon d'arbre (14) guidé vers le centre de véhicule, lesquels tronçons d'arbre sont reliés l'un à l'autre par l'intermédiaire de l'articulation de transmission de couple (18), et **en ce que** notamment le premier tronçon d'arbre (12) peut être déplacé conjointement à l'articulation de transmission de couple (18) lors d'un mouvement de pivotement de l'élément porteur côté roue (17) pour le réglage de pincement/carrossage à la manière d'un mouvement d'oscillation autour d'un axe médian de l'élément porteur côté essieu (19).

4. Suspension de roue selon l'une des revendications précédentes, **caractérisée en ce que** l'articulation de transmission de couple (18) est agencée en dehors d'un pôle de mouvement (M_{P}) de la roue de véhicule (1).

5. Suspension de roue selon l'une des revendications précédentes, **caractérisée en ce que** l'espace creux d'organe de réglage (35) comporte sur son côté éloigné de la roue de véhicule (1) un évidement élargi (24) dans lequel est agencée notamment au moins en partie l'articulation de transmission de couple (18).

6. Suspension de roue selon l'une des revendications précédentes, **caractérisée en ce que** l'axe de rotation (27) de la partie tournante côté roue (23) est incliné selon un certain angle d'inclinaison par rapport à l'axe de rotation (28) de la partie tournante côté essieu (25).

7. Suspension de roue selon l'une des revendications précédentes, **caractérisée en ce que** la partie tournante (23) peut tourner avec son axe médian (29, 29') dans un mouvement d'oscillation avec angle de pivotement variable (φ) autour de l'axe de rotation (27).

8. Suspension de roue selon l'une des revendications précédentes, **caractérisée en ce que** l'angle de pivotement (φ) est réglé par la rotation de la partie tournante côté roue (23) et l'orientation spatiale de la combinaison de parties tournantes peut être fixée par la rotation de la partie tournante côté essieu (25) par rapport à l'élément porteur côté essieu (19).

9. Suspension de roue selon l'une des revendications précédentes, **caractérisée en ce qu'**il est associé à chacune des deux parties tournantes (23, 25) un servomoteur (38, 39), notamment un moteur couple, qui est agencé à l'extérieur de la partie tournante respective (23, 25).
